# EUROPEAN PATENT APPLICATION

(11) **EP 4 773 017 A1**
(43) Date of publication of application: **08.07.2026**
(21) Application number: 24858597.8
(22) Date of filing: 28.08.2024
(51) Int. Cl.: G06F 16/332

(54) **INFORMATION INTERACTION METHOD AND APPARATUS, AND COMPUTER-READABLE STORAGE MEDIUM**

(30) Priority: 01.09.2023 CN 202311127087
(71) Applicant: Beijing Zitiao Network Technology Co., Ltd., Beijing 100190 (CN)
(72) Inventor: LIU, Siyu, Beijing 100028 (CN); SONG, Jia, Beijing 100028 (CN); ZHANG, Yaxin, Beijing 100028 (CN)
(74) Representative: Marks & Clerk LLP
(86) International application number: PCT/CN2024/115006
(87) International publication number: WO 2025/045063

(57) **Abstract**

The present disclosure relates to the technical field of terminals, and particularly relates to an information interaction method and apparatus, and a computer-readable storage medium. The information interaction method comprises: receiving a trigger operation of a user for a session function; in response to the trigger operation, displaying an interface of the session function; and on the basis of an action of the user before the trigger operation, displaying, in the interface of the session function, session information corresponding to content involved in the action, wherein the session information comprises candidate questions.

## Description

### CROSS-REFERENCE TO RELATED APPLICATIONS

The present application is based on and claims priority to Chinese Application No. 202311127087.4, filed on September 1, 2023, which is incorporated herein by reference in its entirety.

### TECHNICAL FIELD

The present disclosure relates to the field of terminal technologies, and in particular, to an information interaction method and apparatus, and a computer-readable storage medium.

### BACKGROUND

In the related art, a user may ask questions through a chatbot and achieve automated conversation functions. For example, the user inputs a question in an input box within the interface of the chatbot and submits it. After obtaining the question submitted by the user, the chatbot will automatically generate an answer content based on the question and display the answer content in the interface of the chatbot.

### SUMMARY

According to a first aspect of some embodiments of the present disclosure, an information interaction method is provided. The method includes:
receiving a trigger operation of a user for a conversation function;
displaying, in response to the trigger operation, an interface for the conversation function; and
displaying conversation information in the interface based on behavior of the user prior to the trigger operation, wherein the conversation information corresponds to content involved in the behavior and comprises a candidate question.

In some embodiments, an interface in which the trigger operation for the conversation function is received is a same interface as an interface corresponding to the behavior.

In some embodiments, displaying conversation information in the interface based on behavior of the user prior to the trigger operation includes:
processing the content involved in the target behavior using a machine learning model to generate the conversation information; and
displaying the conversation information.

In some embodiments, the behavior includes viewing multimedia content for a duration exceeding a first threshold.

In some embodiments, the multimedia content meets a target condition.

In some embodiments, the target condition is that data of post-viewing search(es) or post-viewing question(s) for the multimedia content exceeds a second threshold.

In some embodiments, the data of post-viewing search(es) or post-viewing question(s) is positively correlated with a number of instance(s) of the post-viewing search(es) or the post-viewing question(s) for the multimedia content and negatively correlated with a number of instances that the multimedia content is viewed.

In some embodiments, the candidate question is generated based on the multimedia content.

In some embodiments, the conversation information further includes at least one of a descriptive text of the multimedia content generated based on the multimedia content or an answer to an automatically generated question.

In some embodiments, receiving the trigger operation of the user for the conversation function includes:
receiving the trigger operation of the user for the conversation function on a playback interface for the multimedia content.

In some embodiments, the multimedia content is in a media stream.

In some embodiments, the behavior includes a search.

In some embodiments, the candidate question is generated based on a search term of the search.

In some embodiments, the conversation information further includes at least one of multimedia content searched based on the search term or a descriptive text generated based on the multimedia content.

In some embodiments, receiving the trigger operation of the user for the conversation function includes:
receiving the trigger operation of the user for the conversation function in a search result interface for the search.

In some embodiments, the search result interface for the search includes multimedia content searched based on the search term, a descriptive text generated based on the multimedia content, and a trigger control for the conversation function.

In some embodiments, the trigger control for the conversation function includes the candidate question generated based on the search term, and displaying, based on the behavior of the user prior to the trigger operation, the conversation information corresponding to the content involved in the behavior in the interface for the conversation function includes:
displaying the candidate question and an answer to the candidate question in the interface for the conversation function.

In some embodiments, displaying conversation information in the interface based on behavior of the user prior to the trigger operation includes:
displaying, in response to the behavior of the user prior to the trigger operation being specified behavior, first conversation information in the interface, the first conversation information corresponding to the content involved in the behavior.

In some embodiments, the information interaction method further includes:
displaying, in response to the behavior of the user prior to the trigger operation being not specified behavior, second conversation information in the interface for the conversation function, where the second conversation information includes a candidate question determined based on at least one of a question of another user in the conversation function, an attribute of the user, or historical data of the user.

In some embodiments, the second conversation information includes first guidance information in response to the user using the conversation function for a first time; and the second conversation information includes second guidance information different from the first guidance information, in response to the user using the conversation function not for a first time, but using the conversation function for a first time within a specified time period.

In some embodiments, the information interaction method further includes:
determining a candidate question based on a question of another user in the conversation function in response to detecting information sent from the user that indicates ending of a conversation in the interface for the conversation function; and
generating the conversation information including the candidate question.

In some embodiments, the information interaction method further includes:
displaying, in response to a selection operation of the user for the candidate question, an answer to the selected candidate question.

In some embodiments, the information interaction method further includes:
displaying, in response to a question of the user in the interface for the conversation function, an answer to the question and a supplementary candidate question generated based on the question and the answer.

According to a second aspect of some embodiments of the present disclosure, an information display apparatus is provided. The apparatus includes:
a memory; and
a processor coupled to the memory, where the processor is configured to execute any one of the preceding information interaction methods based on instructions stored in the memory.

According to a third aspect of some embodiments of the present disclosure, a computer-readable storage medium is provided, which has a computer program stored thereon that, when executed by a processor, causes any one of the preceding information interaction methods to be implemented.

According to a fourth aspect of some embodiments of the present disclosure, a computer program is provided. The computer program includes instructions that, when executed by a processor, cause the processor to execute any one of the preceding information interaction methods.

From the following detailed description of exemplary embodiments of the present disclosure with reference to the accompanying drawings, other features and advantages of the present disclosure will become clear.

### BRIEF DESCRIPTION OF THE DRAWINGS

In order to more clearly describe the technical solutions in the embodiments of the present disclosure or in the prior art, the accompanying drawings for describing the embodiments or the prior art will be briefly described below. Apparently, the accompanying drawings in the description below show merely some embodiments of the present disclosure, and those of ordinary skill in the art may still derive other accompanying drawings from these accompanying drawings without any creative efforts.
FIG. 1 illustrates a schematic flowchart of an information interaction method according to some embodiments of the present disclosure.
FIG. 2A illustrates a schematic diagram of an interface for a conversation function according to some embodiments of the present disclosure.
FIG. 2B illustrates a schematic diagram of an interface for a conversation function according to some other embodiments of the present disclosure.
FIG. 2C illustrates a schematic diagram of an interface for a conversation function according to still other embodiments of the present disclosure.
FIG. 3 illustrates, by way of example, a schematic diagram of a search result interface according to some embodiments of the present disclosure.
FIG. 4 illustrates a schematic diagram of an interface for a conversation function according to yet other embodiments of the present disclosure.
FIG. 5 illustrates a schematic structural diagram of an information interaction apparatus according to some embodiments of the present disclosure.
FIG. 6 illustrates a schematic structural diagram of an information interaction apparatus according to some other embodiments of the present disclosure.
FIG. 7 illustrates a schematic structural diagram of an information interaction apparatus according to still other embodiments of the present disclosure.

### DETAILED DESCRIPTION

The technical solutions in the embodiments of the present disclosure are clearly and completely described below with reference to the accompanying drawings of the embodiments of the present disclosure. However, apparently, the embodiments described are merely some embodiments of the present disclosure rather than all the embodiments. The following description of at least one exemplary embodiment is actually illustrative only, and in no way serves as any limitation to the present disclosure and application or use thereof. All other embodiments obtained by those of ordinary skill in the art based on the embodiments of the present disclosure without any creative effort shall fall within the scope of protection of the present disclosure.

Unless specifically stated otherwise, the relative arrangement of components and steps, numerical expressions, and numerical values set forth in these embodiments do not limit the scope of the present disclosure.

Also, it should be understood that, for ease of description, the sizes of various parts shown in the drawings are not drawn to actual scale.

Technologies, methods, and devices known to those skilled in the art may not be discussed in detail, but where appropriate, such technologies, methods, and devices should be considered as part of the specification.

In all examples shown and discussed here, any specific value should be interpreted as merely illustrative and not as limitations. Therefore, there may be different values in other examples of an exemplary embodiment.

It should be noted that similar reference signs and letters refer to similar items in the following accompanying drawings. Therefore, once a specific item is defined in one of the accompanying drawings, it need not be further discussed in subsequent accompanying drawings.

Currently, chatbots still have the problems that users lack understanding of them and interaction operations are inconvenient, resulting in relatively low information interaction efficiency.

A technical problem to be solved by embodiments of the present disclosure is: how to improve the efficiency of information interaction between a user and a chatbot.

After analysis, it is found that the reasons for the low information interaction efficiency of the chatbot at least include: some users do not understand how to use the chatbot, and users consider the operation of inputting questions cumbersome. In order to at least solve the problem of low information interaction efficiency, the present disclosure provides an information interaction method and apparatus, and a computer-readable storage medium, so as to improve the information interaction process of a conversation function.

The conversation function in the present disclosure refers to a function capable of automatically generating information related to content sent by a user based on the content, analogous to a function of the user having a conversation with a chatbot. An interface for the conversation function may be presented in a style of a chat interface between a user and a chatbot, and information sent by the user and information sent by the chatbot (i.e., information automatically generated by the conversation function) are displayed in different manners. For example, a user identifier such as an avatar or a user name is added to the information sent by the user, and an identifier of the chatbot is added to the information sent by the chatbot; for another example, different background colors are set for the information sent by the user and the information sent by the chatbot; for still another example, the information sent by the user is aligned close to one side of the interface, and the information sent by the chatbot is aligned close to the other side of the interface. The layout manner in the above-mentioned interface is only an example and does not play a limiting role on the embodiments of the present disclosure.

The conversation function may be integrated in various types of applications, for example, a video application, a search application, or a comprehensive application aggregating a plurality of functions. An entry of the conversation function may be set in one or more interfaces of an application as needed, such that when a user needs to use the conversation function, the user may jump to the interface for the conversation function by triggering the entry of the conversation function.

In the embodiments of the present disclosure, after the user triggers display of the conversation function, conversation information generated is automatically displayed in the interface for the conversation function. Thus, even if the user does not directly send information in the conversation function, the conversation function also automatically generates conversation information based on information obtained through other channels and displays the conversation information to the user.

In order to further improve the efficiency of information interaction, in an embodiment of the present disclosure, the displayed conversation information includes one or more candidate questions. Candidate questions are questions listed by the conversation function that a user may potentially ask. Thus, the user can make a selection from these candidate questions, and the selected candidate question will be automatically sent on behalf of the user. The conversation function then automatically provides an answer based on the sent question. In some embodiments, the candidate question may be located in an interactive control, and the user selects a candidate question by triggering the interactive control. Therefore, in a case where the candidate question displayed in the interface for the conversation function includes content the user intends to inquire about, the user can interact with the conversation function through a simple selection operation. In addition to candidate questions, the conversation information may further include guidance information or other content.

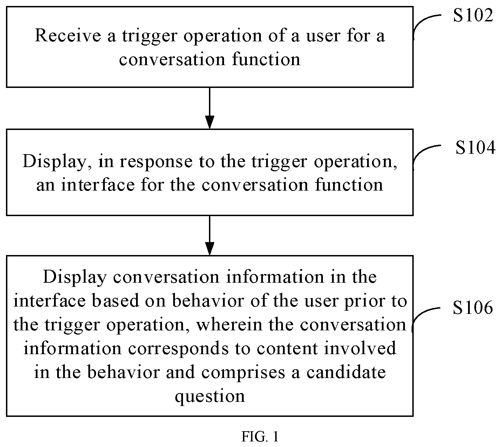

The embodiments of the present disclosure provide a method for displaying conversation information based on behavior of a user prior to a trigger operation. An embodiment of an information interaction method of the present disclosure is described below with reference to FIG. 1. The method in this embodiment may be executed by an electronic device, for example, a terminal device such as a computer, a mobile phone, a tablet, and a wearable device.

FIG. 1 illustrates a schematic flowchart of an information interaction method according to some embodiments of the present disclosure. As shown in FIG. 1, the information interaction method in this embodiment includes steps S102 to S106.

In step S102, a trigger operation of a user for a conversation function is received. For example, an interactive control is used to represent an entry of the conversation function, and the user implements the trigger operation for the conversation function through triggering this entry. The trigger operation is, for example, a click operation on the entry. For another example, the user invokes the conversation function through a voice command, such that the user is not limited to triggering the conversation function only in an interface having an entry of the conversation function deployed. As needed, those skilled in the art may also use other triggering manners, which will not be repeated here.

In step S104, in response to the trigger operation, an interface for the conversation function is displayed. An interface in which the trigger operation is received is different from the interface for the conversation function. That is, after the user triggers the conversation function in a certain interface, the user may jump from that interface to the interface for the conversation function.

In step S106, conversation information is displayed in the interface based on behavior of the user prior to the trigger operation, wherein the conversation information corresponds to content involved in the behavior and comprises a candidate question. The displayed conversation information is information sent by the conversation function to the user, for example, information sent by the chatbot to the user.

The behavior of the user prior to the trigger operation includes, for example, behavior of viewing multimedia content, search behavior, and so on. When the user performs certain behaviors, there may already exist a question demand. Thus, for behavior of the user indicating that a question demand exists, conversation information corresponding to the content involved in that behavior may be displayed. For example, for behavior of the user viewing multimedia content, the content involved in the behavior may be the multimedia content; and for search behavior of the user, the content involved in the behavior may be a search term.

The behavior of the user prior to the trigger operation may be behavior relatively close in timing to the triggering of the conversation function. For example, the behavior is determined based on a recent, specified number of user operations prior to the trigger operation, or the behavior is determined based on user operations within a recent, specified time period prior to the trigger operation.

In some embodiments, an interface in which the trigger operation for the conversation function is received is the same interface as an interface corresponding to the behavior. That is, the behavior of the user occurs in a last interface prior to displaying the interface for the conversation function. The content involved in the behavior of the user in that interface is more likely to be related to a question the user intends to ask. For example, when the user performs some behaviors in that interface, a doubt arises, and the conversation function is triggered. Displaying candidate questions related to content about which the user has a doubt in the interface for the conversation function can provide timely guidance to resolve the doubt for the user, thereby improving the efficiency of information interaction.

The conversation information corresponding to the content involved in the behavior may be generated by understanding the content involved in the behavior through a machine learning model. In some embodiments, the content involved in the target behavior is processed using a machine learning model to generate the conversation information, and the conversation information is displayed. The machine learning model is, for example, a text processing model, an image processing model, a video processing model, a voice processing model, or a comprehensive model having the above-mentioned multiple processing functions at the same time. Embodiments of the present disclosure may use one or more machine learning models for processing as needed. The machine learning model may be pre-trained based on a category of content to be processed, an application scenario, and the like. For example, a pre-trained foundation model may be trained using training data of a specified category or application scenario. Thus, the trained model can deeply understand the content involved in the target behavior and provide conversation information including candidate questions.

In embodiments of the present disclosure, the behavior of the user prior to triggering the conversation function is used to generate conversation information including candidate questions, and the conversation information is displayed in the interface for the conversation function, thereby enabling automatic generation of potential questions of the user and facilitating quick starting of a conversation by the user. Therefore, embodiments of the present disclosure can improve the efficiency of information interaction.

Embodiments of information interaction of the present disclosure are described below separately in conjunction with two scenarios: triggering a conversation function during viewing multimedia content and triggering a conversation function in search results.

First, an embodiment of triggering a conversation function during viewing multimedia content is described. That is, the conversation information is generated based on the content involved in the behavior of the user viewing multimedia content. The candidate question included in the conversation information may be generated based on the multimedia content. For example, the multimedia content is processed using a machine learning model to obtain candidate questions output by the machine learning model. In addition, the conversation information may further include at least one of a descriptive text of the multimedia content generated based on the multimedia content or an answer to an automatically generated question.

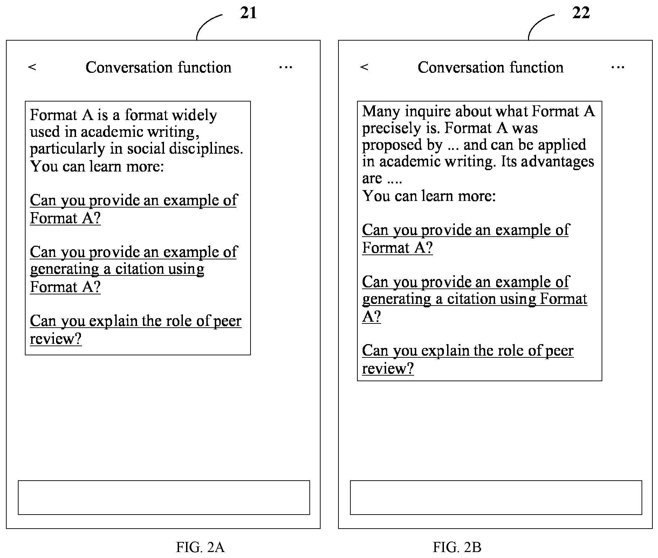

For example, the conversation information may include an automatically generated summary (i.e., descriptive text) of the multimedia content, and a candidate question, where the candidate question is an interactive control. An example of conversation information sent by the conversation function to the user is shown in FIG. 2A. In an interface 21 for the conversation function in FIG. 2A, "Format A is a format widely used in academic writing, particularly in social disciplines" is a descriptive text for a certain video concerning Format A, and three subsequent candidate questions are presented to the user with underlining to indicate that they are clickable and selectable. In this example, the conversation information further includes guidance information "You can learn more".

For another example, the conversation function may automatically select a generated candidate question and display its corresponding answer content as well as the candidate question, where the candidate question is an interactive control. Another example of conversation information sent by the conversation function to the user is shown in FIG. 2B. In an interface 22 for the conversation function in FIG. 2B, "Many inquire about what Format A precisely is. Format A was proposed by ... and can be applied in academic writing. Its advantages are ..." is an answer to the automatically generated question "Could you provide an introduction to Format A?". For candidate questions in this example, reference can be made to the previous example, which will not be repeated here.

In some embodiments, the conversation information may include a descriptive text and an answer to an automatically generated question at the same time. This will not be repeated here.

In some multimedia content applications, in some scenarios, a user purposefully opens an interface for multimedia content. For example, the user clicks an entry for a video on a video catalog page. Taking a long-video viewing application as an example, after browsing introductions of some movies on a homepage of the application, the user triggers a playback interface for a certain movie by clicking an entry for that movie. At this time, it may be considered that the user purposefully views that movie. In this case, in response to a trigger operation of the user for the conversation function on a playback page of the multimedia content, the conversation function may directly generate conversation information based on that multimedia content.

In some other scenarios, however, not every video played to the user is a video viewed by the user. For example, in a short video application, the user may switch between playback interfaces for a plurality of different videos pushed by the application through switching operations such as swiping up or down; if during playback of a certain video, the user merely briefly browses it before deciding that they are uninterested in this video and rapidly switching to the next video, it may be considered that the user did not view that video. For such cases, whether the multimedia content viewed by the user is a video for which the user has a potential question demand may be determined via a duration threshold. In some embodiments, the behavior of which the involved content is used for generating conversation information includes viewing multimedia content for a duration exceeding a first threshold. Thus, when the user views certain multimedia content for up to the first threshold, that is, when a playback duration of the multimedia content reaches the first threshold, the conversation information is generated based on content (e.g., the multimedia content) involved in the behavior of the user viewing that multimedia content.

Of course, the processing manners in these two scenarios are not limiting. As needed, those skilled in the art may also apply a first threshold for viewing multimedia content in the first scenario to determine behavior for generating the conversation information, and impose no limitation on viewing duration for the second scenario.

In some embodiments, in a case where a duration for which the user views the multimedia content exceeds a duration threshold, whether to generate conversation information based on content involved in that viewing behavior is further determined in combination with other information. For example, for multimedia content meeting a target condition, in a case where a duration for which the user views the multimedia content exceeds the duration threshold, conversation information is generated based on that viewing behavior.

For example, the target condition is that data of post-viewing search(es) or post-viewing question(s) for the multimedia content exceeds a second threshold. A post-viewing search refers to a case where a next operation performed by the user after viewing the multimedia content is a search; a post-viewing question refers to a case where a next operation performed by the user after viewing the multimedia content is asking a question (e.g., triggering a conversation function). The data of post-viewing search(es) or post-viewing question(s) is data determined based on a number of instance(s) of post-viewing search(es) or post-viewing question(s). In some embodiments, data of post-viewing search(es) or post-viewing question(s) is positively correlated with a number of instance(s) of post-viewing search(es) or post-viewing question(s) for the multimedia content and negatively correlated with a number of instances that the multimedia content is viewed. For example, it is determined based on a ratio of the number of instance(s) of post-viewing search(es) or post-viewing question(s) to the number of instances of being viewed. Thus, the data of post-viewing search(es) or post-viewing question(s) can reflect a proportion of users further understanding the multimedia content through questions, searches, and other manners after viewing the multimedia content. That is, when a user views multimedia content more likely to bring doubts to the user for more than the first threshold, the conversation information is generated based on content involved in that viewing behavior.

Next, an embodiment of triggering a conversation function during a search process is described. In some embodiments, a trigger operation of the user for the conversation function is received in a search result interface for the search. A search term is content involved in the search behavior. That is, the user performing a search indicates that the user has doubts about the search term, so conversation information may be further generated based on the search term. For example, the candidate question is generated based on the search term. The search term may be processed using a machine learning model to obtain the candidate question output by the machine learning model.

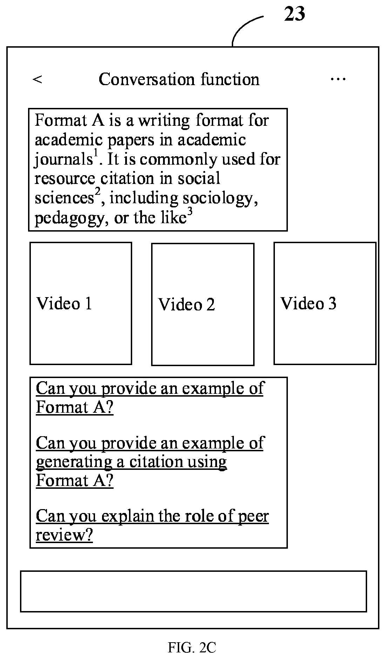

In some embodiments, in addition to the candidate question, the conversation information further includes at least one of multimedia content searched based on the search term or a descriptive text generated based on the multimedia content. Yet another example of conversation information sent by the conversation function to the user is shown in FIG. 2C. In an interface 23 for the conversation function in FIG. 2C, "Format A is a writing format for academic papers in academic journals 1. It is commonly used for resource citation in social sciences 2, including sociology, pedagogy, or the like 3" is a descriptive text generated based on searched videos 1, 2 and 3. Interactive cards below the videos are candidate questions generated based on the search term. Of course, besides the search term, candidate questions may also be generated further based on search results.

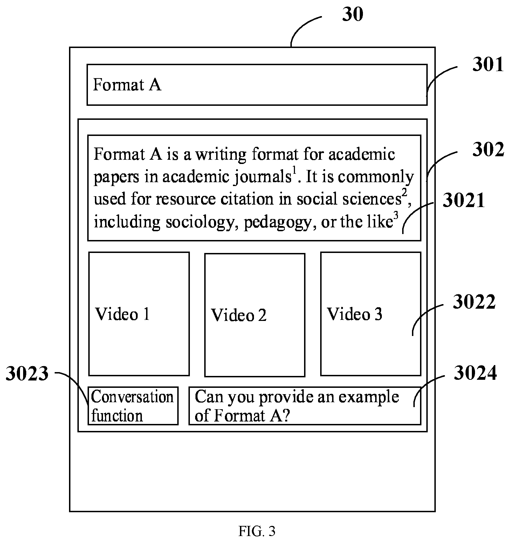

Such conversation information may also be directly displayed in the search results. In some embodiments, the search result interface for the search includes multimedia content searched based on the search term, a descriptive text generated based on the multimedia content, and a trigger control for the conversation function. Thus, search results from more dimensions may be provided to the user based on the descriptive text automatically generated based on the searched multimedia content. FIG. 3 illustrates, by way of example, a schematic diagram of a search result interface according to some embodiments of the present disclosure. As shown in FIG. 3, in a search result interface 30, results searched based on a search term "Format A" in a search box 301 are displayed. In the search results, a card 302 is included, the card 302 including a descriptive text 3021, three videos 3022 most relevant to the search term, and trigger controls 3023 and 3024 for the conversation function. The trigger control 3023 is, for example, used to trigger the interface shown in FIG. 2C.

In some embodiments, a trigger control for the conversation function includes the candidate question generated based on the search term, such as the trigger control 3024 in FIG. 3. In a case where the user triggers the conversation function via a trigger control including a candidate question, the candidate question and an answer thereto are displayed in an interface for the conversation function. Thus, the user can achieve opening the interface for the conversation function and asking a question through one operation, thereby improving the efficiency of information interaction.

Some embodiments of the present disclosure may, based on different conditions, additionally display content corresponding to the conditions in the conversation function upon the user's entry into the conversation function.

In some embodiments, in response to the behavior of the user prior to the trigger operation being specified behavior, first conversation information is displayed in the interface, the first conversation information corresponding to the content involved in the behavior. For specific implementations of this case, reference may be made to the preceding various embodiments, which will not be repeated here.

In response to the behavior of the user prior to the trigger operation being not specified behavior, second conversation information is displayed in the interface for the conversation function, where the second conversation information includes a candidate question determined based on at least one of a question of another user in the conversation function, an attribute of the user, or historical data of the user.

That is, in a case where "context" (specified behavior) exists before the user enters the conversation function, it is indicated that the user may purposefully ask some questions. In this case, the conversation information may be generated based on the context. In a case where no "context" exists before the user enters the conversation function, the candidate question may be generated based on at least one of the user's own information or another users' information. The another user is, for example, users having an activity level higher than an activity level threshold.

For the case where no "context" exists, further subdivision may be performed based on usage of the conversation function by the user. In some embodiments, the second conversation information includes first guidance information in response to the user using the conversation function for a first time; and the second conversation information includes second guidance information different from the first guidance information, in response to the user using the conversation function not for a first time, but using the conversation function for a first time within a specified time period (for example, using the conversation function for a first time within 24 hours). For example, the first guidance information may be an introduction to the conversation function, and the second guidance information may be "Welcome back". Thus, guidance information may be provided according to a degree of familiarity of the user with the conversation function, thereby facilitating user understanding and use and improving interaction efficiency.

Table 1 shows, by way of example, the contents of the conversation information displayed when entering the interface for the conversation function in the various cases described above.

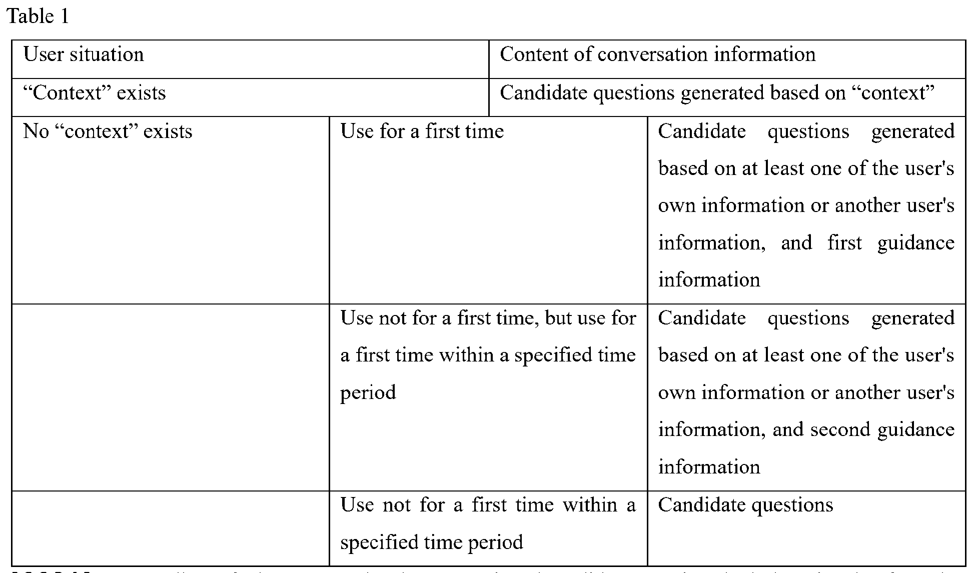

Regardless of what content the above-mentioned candidate questions include or in what form they are displayed, the user may select and send a candidate question to the conversation function by triggering an interactive control for the candidate question. In the interface for the interaction function, in response to a selection operation of the user for the candidate question, an answer to a selected candidate question is displayed.

It can be understood that before the use of the technical solutions in the embodiments of the present disclosure, a user shall be informed of the type, range of use, use scenarios, and the like, of involved personal information in an appropriate manner, and the authorization of the user shall be obtained.

For example, in response to reception of an active request from a user, prompt information is sent to the user to clearly inform the user that the requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

In an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining user authorization is only illustrative and does not constitute a limitation on the implementations of the present disclosure, and other manners that satisfy the relevant laws and regulations may also be applied in the implementations of the present disclosure.

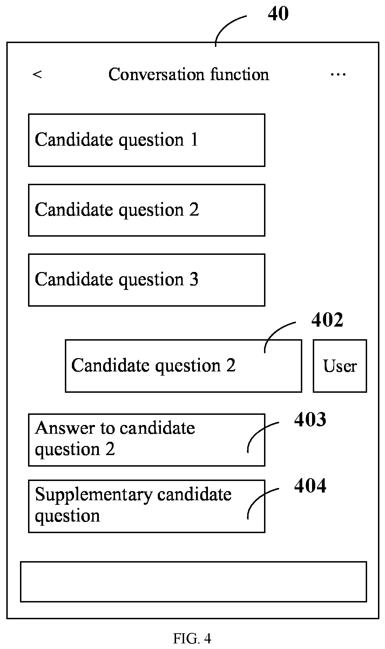

FIG. 4 illustrates a schematic diagram of an interface for a conversation function according to yet other embodiments of the present disclosure. In FIG. 4, an interface 40 for a conversation function displays three candidate questions 1, 2 and 3 provided by the conversation function. In response to the user selecting an interactive control 401 where candidate question 2 is located, candidate question 2 is automatically sent for the user, and the user does not need to input this question in an input box, as shown by a conversation card 402. Then, the conversation function further provides an answer to question 2, as shown by a conversation card 403.

In some embodiments, in response to a question of the user in the interface for the conversation function, an answer to the question and a supplementary candidate question generated based on the question and the answer are displayed. The question may be a question that is automatically sent by the user through selection from the candidate questions, or a question manually input by the user. Still referring to FIG. 4, after the conversation function provides the answer 403, an interactive control 404 for supplementary candidate questions may be further displayed. Thus, the user may be guided to ask further questions to efficiently resolve further doubts arising after the user reads the answer.

In some embodiments, a candidate question is determined based on a question of another user in the conversation function in response to detecting information sent from the user that indicates ending of a conversation in the interface for the conversation function; and the conversation information including the candidate questions is generated. For example, when the user sends content such as "Thank you" or "Goodbye", it may be determined that this is information indicating ending of the conversation. That is, the user's current doubts have been resolved. In this case, by further presenting some candidate questions, the user may be guided to continue interacting with the conversation function.

Interfaces in the various embodiments of the present disclosure described above are merely schematic. For example, the number of candidate questions may be set as needed, and the layout and the style of an interface may also be set as needed, which will not be repeated here.

In embodiments of the present disclosure, processes of generating conversation information and answers may be executed by a terminal displaying the interface for the conversation function, or relevant information may be sent by the terminal to a server for generation by the server, and then the server sends the generated information to the terminal for display in the interface for the conversation function.

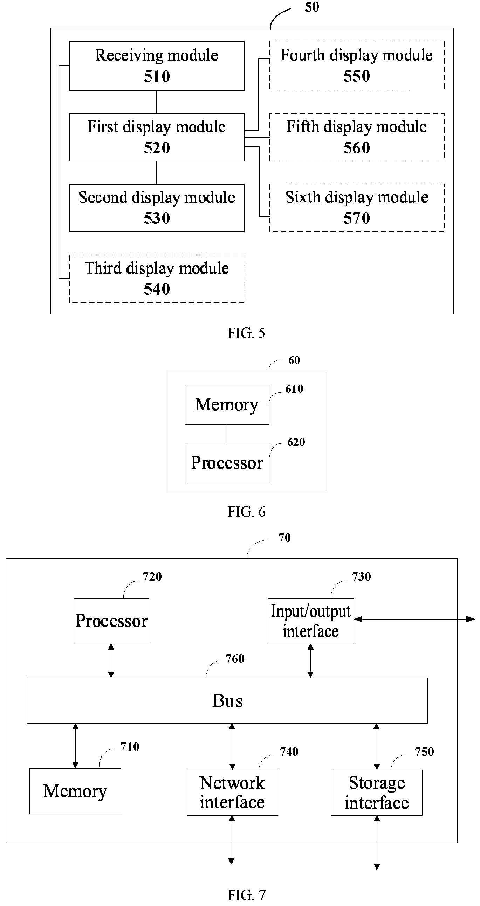

An embodiment of an information interaction apparatus of the present disclosure is described below with reference to FIG. 5.

FIG. 5 illustrates a schematic structural diagram of an information interaction apparatus according to some embodiments of the present disclosure. As shown in FIG. 5, the information interaction apparatus 50 in this embodiment includes:
a receiving module 510 configured to receive a trigger operation of a user for a conversation function;
a first display module 520 configured to display, in response to the trigger operation, an interface for the conversation function; and
a second display module 530 configured to display conversation information in the interface based on behavior of the user prior to the trigger operation, wherein the conversation information corresponds to content involved in the behavior and comprises a candidate question.

In some embodiments, an interface in which the trigger operation for the conversation function is received is a same interface as an interface corresponding to the behavior.

In some embodiments, the second display module 530 is further configured to:
process the content involved in the target behavior using a machine learning model to generate the conversation information; and
display the conversation information.

In some embodiments, the behavior includes viewing multimedia content for a duration exceeding a first threshold.

In some embodiments, the multimedia content meets a target condition.

In some embodiments, the target condition is that data of post-viewing search(es) or post-viewing question(s) for the multimedia content exceeds a second threshold.

In some embodiments, the data of post-viewing search(es) or post-viewing question(s) is positively correlated with a number of instance(s) of the post-viewing search(es)or post-viewing question(s) for the multimedia content and negatively correlated with a number of instances that the multimedia content is viewed.

In some embodiments, the candidate question is generated based on the multimedia content.

In some embodiments, the conversation information further includes at least one of a descriptive text of the multimedia content generated based on the multimedia content or an answer to an automatically generated question.

In some embodiments, the receiving module 510 is further configured to:
receive the trigger operation of the user for the conversation function on a playback interface for the multimedia content.

In some embodiments, the multimedia content is in a media stream.

In some embodiments, the behavior includes a search.

In some embodiments, the candidate question is generated based on a search term of the search.

In some embodiments, the conversation information further includes at least one of multimedia content searched based on the search term or a descriptive text generated based on the multimedia content.

In some embodiments, the receiving module 510 is further configured to:
receive the trigger operation of the user for the conversation function in a search result interface for the search.

In some embodiments, the search result interface for the search includes multimedia content searched based on the search term, a descriptive text generated based on the multimedia content, and a trigger control for the conversation function.

In some embodiments, the trigger control for the conversation function includes the candidate question generated based on the search term, and the second display module 530 is further configured to:
display the candidate question and an answer to the candidate question in the interface for the conversation function.

In some embodiments, the second display module 530 is further configured to:
display, in response to the behavior of the user prior to the trigger operation being specified behavior, first conversation information in the interface, the first conversation information corresponding to the content involved in the behavior.

In some embodiments, the information interaction apparatus 50 further includes a third display module 540 configured to:
display, in response to the behavior of the user prior to the trigger operation being not specified behavior, second conversation information in the interface for the conversation function, where the second conversation information includes a candidate question determined based on at least one of a question of another user in the conversation function, an attribute of the user, or historical data of the user.

In some embodiments, the second conversation information includes first guidance information in response to the user using the conversation function for a first time; and the second conversation information includes second guidance information different from the first guidance information, in response to the user using the conversation function not for a first time, but using the conversation function for a first time within a specified time period.

In some embodiments, the information interaction apparatus 50 further includes a fourth display module 550 configured to:
determining a candidate question based on a question of another user in the conversation function in response to detecting information sent from the user that indicates ending of a conversation in the interface for the conversation function; and
generate the conversation information including the candidate question.

In some embodiments, the information interaction apparatus 50 further includes a fifth display module 560 configured to:
display, in response to a selection operation of the user for the candidate question, an answer to the selected candidate question.

In some embodiments, the information interaction apparatus 50 further includes a sixth display module 570 configured to:
display, in response to a question of the user in the interface for the conversation function, an answer to the question and a supplementary candidate question generated based on the question and the answer.

FIG. 6 illustrates a schematic structural diagram of an information interaction apparatus according to some other embodiments of the present disclosure. As shown in FIG. 6, the information interaction apparatus 60 in this embodiment includes: a memory 610 and a processor 620 coupled to the memory 610, where the processor 620 is configured to perform the information interaction method according to any one of the preceding embodiments based on instructions stored in the memory 610.

The memory 610 may include, for example, a system memory, a fixed non-volatile storage medium, etc. The system memory has, for example, an operating system, an application, a boot loader, and other programs stored therein.

FIG. 7 illustrates a schematic structural diagram of an information interaction apparatus according to still other embodiments of the present disclosure. As shown in FIG. 7, the information interaction apparatus 70 in this embodiment includes: a memory 710 and a processor 720, and may further include an input/output interface 730, a network interface 740, a storage interface 750, or the like. These interfaces 730, 740, and 750, and the memory 710 and the processor 720 may be connected to each other via a bus 760, for example. Among them, the input/output interface 730 provides a connection interface for an input/output device such as a display, a mouse, a keyboard, and a touch screen. The network interface 740 provides a connection interface for various networking devices. The storage interface 750 provides a connection interface for an external storage device such as an SD card and a USB flash drive.

Embodiments of the present disclosure further provide a computer-readable storage medium having a computer program stored thereon, where the program, when executed by the processor, causes any one of the preceding information interaction methods to be implemented.

It should be understood by those skilled in the art that the embodiments of the present disclosure can be provided as a method, a system, or a computer program product. Accordingly, the present disclosure may take a form of an entirely hardware embodiment, an entirely software embodiment, or an embodiment combining software and hardware aspects. Furthermore, the present disclosure may take the form of a computer program product that is implemented on one or more computer-usable non-transitory storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be understood that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

The above description is merely illustrative of the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. An information interaction method, comprising:
receiving a trigger operation of a user for a conversation function;
displaying, in response to the trigger operation, an interface for the conversation function; and
displaying conversation information in the interface based on behavior of the user prior to the trigger operation, wherein the conversation information corresponds to content involved in the behavior and comprises a candidate question.

2. The information interaction method according to claim 1, wherein an interface in which the trigger operation for the conversation function is received is a same interface as an interface corresponding to the behavior.

3. The information interaction method according to claim 1 or 2, wherein displaying conversation information in the interface based on behavior of the user prior to the trigger operation comprises:
processing the content involved in the target behavior using a machine learning model to generate the conversation information; and
displaying the conversation information.

4. The information interaction method according to any one of claims 1 to 3, wherein the behavior comprises viewing multimedia content for a duration exceeding a first threshold.

5. The information interaction method according to claim 4, wherein the multimedia content meets a target condition.

6. The information interaction method according to claim 5, wherein the target condition is that data of post-viewing search(es) or post-viewing question(s) for the multimedia content exceeds a second threshold.

7. The information interaction method according to claim 6, wherein the data of post-viewing search(es) or post-viewing question(s) is positively correlated with a number of instance(s) of the post-viewing search(es) or the post-viewing question(s) for the multimedia content and negatively correlated with a number of instances that the multimedia content is viewed.

8. The information interaction method according to any one of claims 4 to 7, wherein the candidate question is generated based on the multimedia content.

9. The information interaction method according to any one of claims 4 to 8, wherein the conversation information further comprises at least one of a descriptive text of the multimedia content generated based on the multimedia content or an answer to an automatically generated question.

10. The information interaction method according to any one of claims 4 to 9, wherein receiving the trigger operation of the user for the conversation function comprises:
receiving the trigger operation of the user for the conversation function on a playback interface for the multimedia content.

11. The information interaction method according to any one of claims 4 to 10, wherein the multimedia content is in a media stream.

12. The information interaction method according to any one of claims 1 to 11, wherein the behavior comprises a search.

13. The information interaction method according to claim 12, wherein the candidate question is generated based on a search term of the search.

14. The information interaction method according to claim 13, wherein the conversation information further comprises at least one of multimedia content searched based on the search term or a descriptive text generated based on the multimedia content.

15. The information interaction method according to any one of claims 12 to 14, wherein receiving the trigger operation of the user for the conversation function comprises:
receiving the trigger operation of the user for the conversation function in a search result interface for the search.

16. The information interaction method according to claim 15, wherein the search result interface for the search comprises multimedia content searched based on the search term, a descriptive text generated based on the multimedia content, and a trigger control for the conversation function.

17. The information interaction method according to claim 16, wherein the trigger control for the conversation function comprises the candidate question generated based on the search term, and displaying, based on the behavior of the user prior to the trigger operation, the conversation information corresponding to the content involved in the behavior in the interface for the conversation function comprises:
displaying the candidate question and an answer to the candidate question in the interface for the conversation function.

18. The information interaction method according to any one of claims 1 to 17, wherein displaying conversation information in the interface based on behavior of the user prior to the trigger operation comprises:
displaying, in response to the behavior of the user prior to the trigger operation being specified behavior, first conversation information in the interface, the first conversation information corresponding to the content involved in the behavior.

19. The information interaction method according to any one of claims 1 to 18, further comprising:
displaying, in response to the behavior of the user prior to the trigger operation being not specified behavior, second conversation information in the interface for the conversation function, wherein the second conversation information comprises a candidate question determined based on at least one of a question of another user in the conversation function, an attribute of the user, or historical data of the user.

20. The information interaction method according to claim 19, wherein:
the second conversation information comprises first guidance information in response to the user using the conversation function for a first time; and
the second conversation information comprises second guidance information different from the first guidance information, in response to the user using the conversation function not for a first time, but using the conversation function for a first time within a specified time period.

21. The information interaction method according to any one of claims 1 to 20, further comprising:
determining a candidate question based on a question of another user in the conversation function in response to detecting information sent from the user that indicates ending of a conversation in the interface for the conversation function; and
generating the conversation information comprising the candidate question.

22. The information interaction method according to any one of claims 1 to 21, further comprising:
displaying, in response to a selection operation of the user for the candidate question, an answer to the selected candidate question.

23. The information interaction method according to any one of claims 1 to 22, further comprising:
displaying, in response to a question of the user in the interface for the conversation function, an answer to the question and a supplementary candidate question generated based on the question and the answer.

24. An information display apparatus, comprising:
a memory; and
a processor coupled to the memory, wherein the processor is configured to execute the information interaction method according to any one of claims 1 to 23 based on instructions stored in the memory.

25. A computer-readable storage medium having a computer program stored thereon, wherein the program, when executed by a processor, causes the information interaction method according to any one of claims 1 to 23 to be implemented.

26. A computer program, comprising
instructions that, when executed by a processor, cause the processor to execute the information interaction method according to any one of claims 1 to 23.
